# EUROPEAN PATENT SPECIFICATION

(11) **EP 0 414 160 B1**
(45) Date of publication and mention of the grant of the patent: **11.09.1996**
(21) Application number: 90115848.5
(22) Date of filing: 18.08.1990
(51) Int. Cl.: C08G 59/06, C09D 163/00

(54) **Process for preparing advanced epoxy resins**
Herstellung von kettenverlängerten Epoxyharzen
Préparation de résines époxydes allongées

(30) Priority: 23.08.1989 US 398034
(43) Date of publication of application: 27.02.1991
(73) Proprietor: THE DOW CHEMICAL COMPANY, Midland, Michigan 48641-1967 (US)
(72) Inventor: Heinemeyer, Ben William, Lake Jackson, Texas 77566 (US); Sheih, Pong Su, Lake Jackson, Texas 77566 (US); Wang, David Shauchew, Lake Jackson, Texas 77566 (US)
(74) Representative: Sternagel, Hans-Günther, Dr.

(56) References cited:
- EP-A- 0 193 809
- FR-A- 2 131 981
- FR-A- 2 168 301

## Description

The present invention concerns, a process for the preparation of an advanced epoxy resin.

Coatings, particularly coatings for the interior of beverage and the like cans, have been formulated from advanced epoxy resins. Such coatings prepared from these advanced epoxy resins usually possess good dry adhesion properties, yet somewhat lack in adhesion properties. For the purpose of coating the interior of beverage cans and the like, it is desirable for the coating composition to have both good dry adhesion and wet adhesion properties.

U.S. Patent No. 4,596,861 issued June 24, 1986 to Sheih et al. discloses coating compositions containing advanced epoxy resins which coatings possess good wet adhesion and dry adhesion properties. These coating compositions contain high amounts of solvent. In order to decrease the amount of solvent released to the atmosphere during curing or to decrease the amount of solvent which must be recovered during curing of these coatings, it would be desirable to have available advanced epoxy resins which possess both good wet adhesion and dry adhesion properties and which possess relatively low solvent content.

Methods exist for the preparation of advanced epoxy resins by batch processes, but because the resultant resins from said batch processes are solid at room temperature, upon completion of the reaction for their preparation they are flaked. However, there are inconsistencies in characteristics between batches due to the necessity of having to maintain the resins at elevated temperatures (usually above 200°C) during this flaking operation thus causing continual reaction during this time.

In U.S. Patent No. 4,612,156 issued September 16, 1986 to Heinemeyer et al. a method is disclosed for the continuous preparation of advanced epoxy resins by means of an extruder process. While the products disclosed in U.S. Patent No. 4,612,156 have enough dry adhesion, the products do not have enough wet adhesion at high temperatures (for example, 90°C) for some applications. For example, coatings for cans for hot beverages such as hot coffee, requires strong wet adhesion.

It would be desirable to have available an epoxy resin composition having low solvent content which could be employed in waterborne coating applications. It would also be desirable to prepare coatings from said epoxy resin compositions which coatings would also possess both good dry adhesion and good wet adhesion properties at relatively high temperature.

The present invention pertains to a process for preparing an advanced resin composition containing an organic solvent which process comprises continuously feeding to an extruder the following components either separately or in admixture in any combination
(A) at least one compound having an average of more than one but not more than about two vicinal epoxide groups per molecule and having an epoxide equivalent weight of from 170 to 200;
(B) at least one compound having an average of more than one but not more than two aromatic hydroxyl groups per molecule;
(C) a catalytic quantity of at least one catalyst for promoting the reaction between components (A) and (B); and
(D) at least one organic solvent; wherein
   (a) components (A) and (B) are employed in quantities such that the resultant advanced resin has an epoxide equivalent weight of from 500 to 25,000 and a weight average molecular weight of from 1000 to 100,000; and
   (b) component (D) is employed in an amount such that the resultant product contains from 0.5 to less than 5 percent by weight based upon the combined weight of components (A), (B), (C) and (D).

The compositions of the present invention are prepared by reacting an epoxy resin with a dihydric phenol in the proper proportions so as to produce a product having an epoxide or aromatic hydroxyl equivalent weight of from 500 to 25,000, more preferably from 700 to 10,000 and a weight average molecular weight of from 1,000 to 100,000, more preferably from 5,000 to 90,000. The obtained product preferably has an epoxide or aromatic hydroxyl equivalent weight of from 3,000 to 3,900 and a weight average molecular weight of from 13,000 to 17,000. The proper proportion depends upon the particular epoxy resin and dihydric phenol being utilized; however, usually the components are employed in amounts which provide a ratio of aromatic hydroxyl groups to epoxide groups suitably from 0.01:1 to 5:1, more suitably from 0.1:1 to 2:1, most suitably from 0.3:1 to 1.1:1. These ratios are important to achieve the desired resin composition.

The advanced epoxy resin can be terminated in epoxide or hydroxyl groups or both depending upon the ratio of aromatic hydroxyl groups to epoxy group.

The reaction is suitably conducted at temperatures of from 90°C to 280°C, more suitably from 120°C to 250°C, most suitably from 170°C to 250°C for a time sufficient to produce the desired product. The higher reaction temperatures require less time to produce the desired product than do the lower reaction temperatures. Particularly suitable reaction times range between 0.01 to 5, more suitably from 0.01 to 0.2, most suitably from 0.01 to 0.06 hours.

At temperatures above 280°C, the product forms gels or decomposes. At temperatures below 90°C, the product solidifies and large amounts of residual bisphenol are found in the product.

Suitable compounds having an average of more than one vicinal epoxy group per molecule which can be employed in the present invention include, for example, the glycidyl esters of compounds having an average of more than one carboxyl group per molecule and the glycidyl ethers of compounds having an average of more than one aromatic hydroxyl group per molecule. Particularly suitable glycidyl ethers include, for example, those represented by the following formulas I or II: 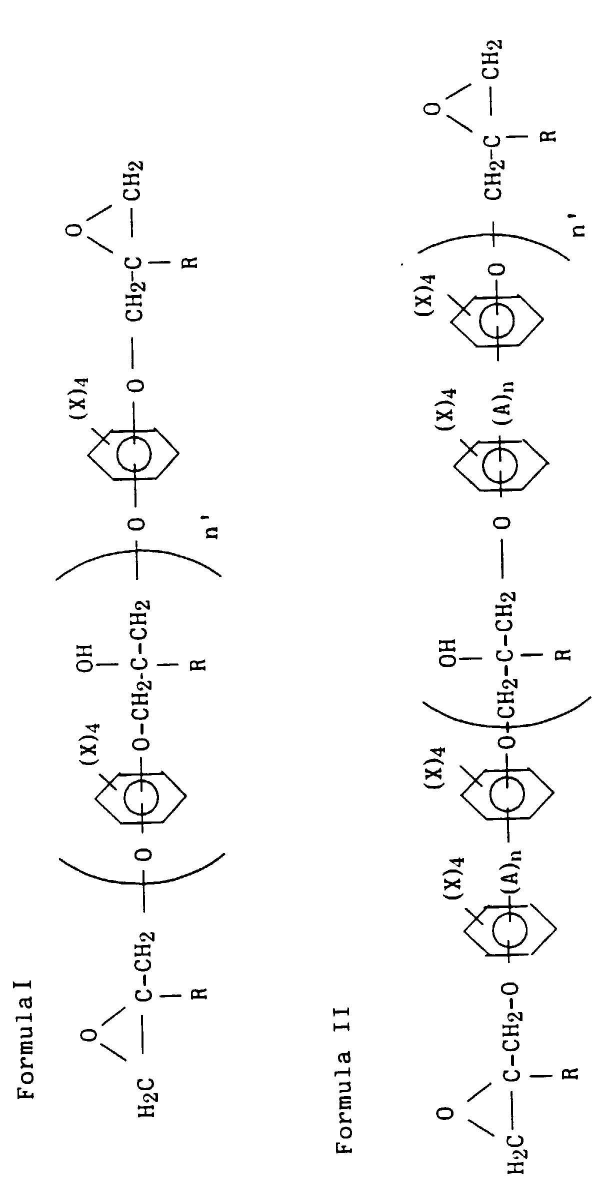 wherein each R is independently hydrogen or a hydrocarbyl group having from 1 to 4 carbon atoms; each A is independently a divalent hydrocarbyl group having suitably from 1 to 20, more suitably from 1 to 10, most suitably from 1 to 6 carbon atoms; each X is independently hydrogen, a hydrocarbyl or hydrocarbyloxy group having suitably from 1 to 20, more suitably from 1 to 10, most suitably from 1 to 6 carbon atoms, or a halogen atom, preferably chlorine or bromine; each n independently has a value of zero or 1 and n′ has a value suitably from zero to 100, more suitably from 4 to 50, most suitably from 10 to 35.

Particularly suitable epoxy-containing compounds include, for example, the diglycidyl ethers of biphenol, bisphenol A, bisphenol F, bisphenol K, bisphenol S, and the halogenated, particularly the brominated, derivatives thereof.

The term "hydrocarbyl" as employed herein means any aliphatic, cycloaliphatic, aromatic, aryl substituted aliphatic or cycloaliphatic, or aliphatic or cycloaliphatic substituted aromatic groups. The aliphatic groups can be saturated or unsaturated. Likewise, the term "hydrocarbyloxy" means a hydrocarbyl group having an oxygen linkage between it and the carbon atom to which it is attached.

Suitable compounds having an average of more than one aromatic hydroxyl group per molecule include, for example, the bisphenols represented by the following formulas III or IV: 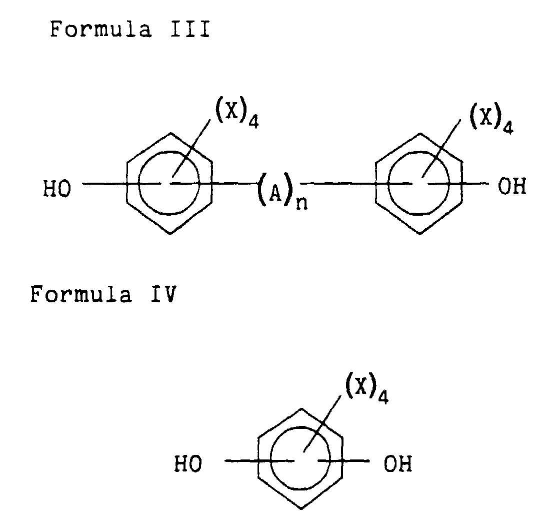 wherein each A, X and n are as defined above.

Particularly suitable aromatic hydroxyl group containing compounds include, for example, biphenol, bisphenol A, bisphenol F, bisphenol K, bisphenol S, and the halogenated, particularly the brominated, derivatives thereof.

Suitable solvents which can be employed in the process of the present invention include, for example, glycol ethers, alcohols, ketones, acetates, aromatic hydrocarbons and any combination thereof. Particularly suitable solvents employed herein include, for example, acetone, methyl ethyl ketone, methyl isobutyl ketone, methyl amyl ketone, diacetone alcohol, C₁ to C₄ alkyl ethers of mono- or di- alkylene glycols such as n-methyl ether of ethylene glycol, methyl ether of ethylene glycol, n-butyl ether of propylene glycol, methyl ether of propylene glycol, n-butyl ether of diethylene glycol, methyl ether of diethylene glycol, n-butyl ether of dipropylene glycol or methyl ether of dipropylene glycol, 3-methyl-3-methoxy butanol, n-butanol, sec-butanol, isopropanol, butyl acetate, toluene, xylene and any combination thereof.

The solvent(s) is (are) suitably employed in amounts of from 0.01 to 5, more suitably from 0.1 to 3, more suitably from 0.5 to 2, more suitably from 0.5 to 1 percent by weight based upon combined weight of the composition (components A, B, C and D).

Suitable catalysts which can be employed in the preparation of the compositions include, for example, phosphonium compounds such as phosphonium carboxylates, phosphonium carboxylate•carboxylic acid complexes, phosphonium halides, phosphonium biscarbonates, phosphonium phosphates and any combination thereof. Particularly suitable such catalysts, include, for example, ethyltriphenylphosphonium acetate•acetic acid complex, ethyltriphenylphosphonium phosphate, tetrabutylphosphonium acetate•acetic acid complex, tetrabutylphosphonium phosphate and any combination thereof.

Also suitable are those catalysts represented by the general formula

^{⊖} Z'R¹R²R³P^{⊕}-Z-P^{⊕}R¹R²R³Z'^{⊖}

wherein each R¹, R² and R³ is independently an aromatic group or an inertly substituted aromatic group; Z is -(C(R⁴)₂)ₐ-; each R⁴ is independently hydrogen or a hydrocarbyl group or inertly substituted hydrocarbyl group containing from 1 to 20, more suitably from 1 to 10, most suitably from 1 to 4 carbon atoms; Z′ is any suitable anion and a has a value of at least 4, suitably from 4 to 20, more suitably from 4 to 10, most suitably from 4 to 6. The term "hydrocarbyl" is as hereinbefore defined. The term "inert substituted hydrocarbyl group" means that the hydrocarbyl group can contain one or more substituent groups that does not enter into the reaction and does not interfere with the reaction between the epoxy compound and the compound with which it is being reacted. Suitable such inert groups include, for example, -CO-Cl, -C≡N and -OH.

Particularly suitable catalyst used in the present invention, include, for example, tetramethylene bis(triphenyl phosphonium chloride), tetramethylene bis(triphenyl phosphonium iodide), tetramethylene bis(triphenyl phosphonium bromide), pentamethylene bis(triphenyl phosphonium chloride), pentamethylene bis(triphenyl phosphonium iodide), pentamethylene bis(triphenyl phosphonium bromide), hexamethylene bis(triphenyl phosphonium iodide), hexamethylene bis(triphenyl phosphonium chloride) hexamethylene bis(triphenyl phosphonium bromide), heptamethylene bis(triphenyl phosphonium chloride), heptamethylene bis(triphenyl phosphonium iodide), heptamethylene bis(triphenyl phosphonium bromide), tetramethylene bis(triphenyl phosphonium acetate•acetic acid complex), pentamethylene bis(triphenyl phosphonium acetate•acetic acid complex), hexamethylene bis(triphenyl phosphonium acetate•acetic acid complex), heptamethylene bis(triphenyl phosphonium acetate•acetic acid complex), tetramethylene bis(triphenyl phosphonium phosphate), pentamethylene bis(triphenyl phosphonium phosphate), hexamethylene bis(triphenyl phosphonium phosphate), heptamethylene bis(triphenyl phosphonium phosphate), tetramethylene bis(triphenyl phosphonium)bicarbonate, pentamethylene bis(triphenyl phosphonium)bicarbonate, hexamethylene bis(triphenyl phosphonium)bicarbonate, heptamethylene bis(triphenyl phosphonium)bicarbonate, tetramethylene bis(triphenyl phosphonium)oxalate, pentamethylene bis(triphenyl phosphonium)oxalate, hexamethylene bis(triphenyl phosphonium)oxalate, heptamethylene bis(triphenyl phosphonium)oxalate and combinations thereof.

Also suitably employed herein as the catalyst are phosphonium compounds which have three phenyl groups attached to the phosphorus atom and one cycloalkyl group attached to the phosphorus atom. It does not matter what the anion portion of the phosphonium compound happens to be. Particularly suitable such anions include, for example, halides such as chloride, bromide or iodide; carboxylates such as formate, acetate, oxalate, trifluoroacetate, carboxylate•carboxylic acid complexes such as acetate•acetic acid complex; conjugate bases of inorganic acids such as bicarbonate, tetrafluoroborate or biphosphate; and conjugate bases of phenols, such as, for example, phenate or an anion derived from a bisphenol or biphenol such as, for example, bisphenol A or bisphenol F, combinations thereof and the like. These cycloalkyl triphenyl phosphonium catalysts can be represented by the following formula 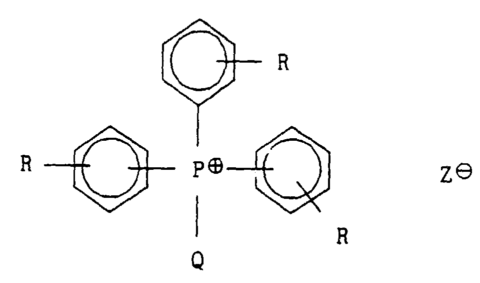 wherein Q is a cycloalkyl or alkyl or halo substituted cycloalkyl group having suitably from 3 to 8, more suitably from 4 to 7, most suitably from 5 to 6 carbon atoms in the cycloalkyl ring; each R is independently hydrogen, a halogen, or a hydrocarbyl group having suitably from 1 to 12, more suitably from 1 to 6, most suitably from 1 to 3 carbon atoms; Z is an anion for example, a halide such as chloride, bromide or iodide; a carboxylate such as formate, acetate, oxalate, trifluoroacetate or a carboxylate•carboxylic acid complex such as, for example, acetate•acetic acid complex; conjugate base of an inorganic acid such as bicarbonate, tetrafluoroborate or biphosphate and a conjugate base of a phenol, such as phenate or an anion derived from a bisphenol or biphenol such as bisphenol A or bisphenol F and combinations thereof. Particularly suitable such catalysts include, for example, cyclopropyl triphenyl phosphonium iodide, cyclopropyl triphenyl phosphonium bromide, cyclopropyl triphenyl phosphonium chloride, cyclopropyl triphenyl phosphonium acetate, cyclopropyl triphenyl phosphonium acetate•acetic acid complex, cyclopropyl triphenyl phosphonium phosphate, cyclopropyl triphenyl phosphonium heptanoate, cyclopropyl triphenyl phosphonium oxalate, cyclobutyl triphenyl phosphonium iodide, cyclobutyl triphenyl phosphonium bromide, cyclobutyl triphenyl phosphonium chloride, cyclobutyl triphenyl phosphonium acetate, cyclobutyl triphenyl phosphonium acetate•acetic acid complex, cyclobutyl triphenyl phosphonium phosphate, cyclobutyl triphenyl phosphonium heptanoate, cyclobutyl triphenyl phosphonium oxalate,cyclopentyl triphenyl phosphonium iodide, cyclopentyl triphenyl phosphonium bromide, cyclopentyl triphenyl phosphonium chloride, cyclopentyl triphenyl phosphonium acetate, cyclopentyl triphenyl phosphonium acetate•acetic acid complex, cyclopentyl triphenyl phosphonium phosphate, cyclopentyl triphenyl phosphonium heptanoate, cyclopentyl triphenyl phosphonium oxalate, cyclopropyl triphenyl phosphonium iodide, cyclopropyl triphenyl phosphonium bromide, cyclopropyl triphenyl phosphonium chloride, cyclopropyl triphenyl phosphonium acetate, cyclopropyl triphenyl phosphonium acetate•acetic acid complex, cyclopropyl triphenyl phosphonium phosphate, cyclopropyl triphenyl phosphonium heptanoate, cyclopropyl triphenyl phosphonium oxalate, cyclohexyl triphenyl phosphonium iodide, cyclohexyl triphenyl phosphonium bromide, cyclohexyl triphenyl phosphonium chloride, cyclohexyl triphenyl phosphonium acetate, cyclohexyl triphenyl phosphonium acetate•acetic acid complex, cyclohexyl triphenyl phosphonium phosphate, cyclohexyl triphenyl phosphonium oxalate, cycloheptyl triphenyl phosphonium iodide, cycloheptyl triphenyl phosphonium bromide, cycloheptyl triphenyl phosphonium chloride, cycloheptyl triphenyl phosphonium acetate, cycloheptyl triphenyl phosphonium acetate•acetic acid complex, cycloheptyl triphenyl phosphonium phosphate, cycloheptyl triphenyl phosphonium heptanoate, cycloheptyl triphenyl phosphonium oxalate, cyclooctyl triphenyl phosphonium iodide, cyclooctyl triphenyl phosphonium bromide, cyclooctyl triphenyl phosphonium chloride, cyclooctyl triphenyl phosphonium acetate, cyclooctyl triphenyl phosphonium acetate•acetic acid complex, cyclooctyl triphenyl phosphonium phosphate, cyclooctyl triphenyl phosphonium heptanoate, cyclooctyl triphenyl phosphonium oxalate and combinations thereof.

The catalyst is employed in any amount which satisfactorily catalyzes the reaction between the bisphenol and the epoxy resin; however suitable such amounts include from 0.01 to 3, more suitably from 0.03 to 2, most suitably from 0.04 to 1 weight percent of catalyst based on the combined weight of the reactants.

The advanced resins are prepared via an extruder process, preferably as described by Heinemeyer et al. in U.S. Patent 4,612,156. The reaction temperatures, reaction times and reactant ratios used in the extruder are as herein described.

Suitable curing agents which can be employed in the coating compositions include, for example, phenol-aldehyde resole resins, urea-aldehyde resins, melamine-aldehyde resins, polyamides, acid anhydrides, primary, secondary and tertiary amines, imidazoles and guanadines any combination thereof. Particularly suitable curing agents include, for example, melamine-formaldehyde resins, phenol-formaldehyde resole resins, urea-formaldehyde resins, polyamides and any combination thereof.

The curing agents are employed in amounts which are sufficient to satisfactorily cure the composition. For example, from 1 to 50, more suitably from 5 to 30, most suitably from 10 to 25, moles of curing agent per epoxide group is sufficient to cure the composition.

The advanced epoxy resins produced by the process of the present invention can be formed into any shape desired upon exiting from the extruder by any suitable means. For example, the resin may be chopped into pellets; flaked into flakes; ground into particles; formed into sheets, pastilles, or films; or any combination thereof.

In addition to the advanced epoxy resin, solvent and curing agents, the coating compositions can contain, dyes, flow control agents, leveling agents other additives such as fillers, pigments and antioxidants.

These additional additives are employed in functionally equivalent amount, that is, an amount which is suitable to produce the desired effect.

The coating compositions can be applied to substrates such as tin, steel, aluminum, wood, plastic and paper.

### Extruder Description

The extruder-reactor used in the following examples was a Werner-Pfleiderer ZSK-30 fully intermeshing, co-rotating twin screw extruder. The extruder barrel was 1140 millimeters in length excluding the die. The extruder barrel had an internal diameter of 30 millimeters making the length to diameter ratio 38/1. The barrel consists of 12 barrel sections and two guide plates. In the 12 sections, there was a feed section; three sections that could be used as vacuum or vent ports, injection ports or plugged to become solid sections, and eight solid sections. The barrel configuration used for this process was a feed port section, vent port section, one solid section, guide plate, seven solid sections, two plugged vent port sections, guide plate, and die section. There were four intensive mixing sections designed into the screws which were 1154 millimeters long excluding the screw tips. It should be noted that the screws extended into the die section of the barrel. The barrel was divided into six heating and cooling zones excluding the feed port section which was individually cooled. The sixth zone included the die section of the barrel. The zones were electrically heated and water cooled. A temperature controller was used to control the barrel temperature of each zone. The melt temperature was measured in the sixth barrel section and at the die.

### Wet and Dry Adhesion

The coatings were tested for wet and dry adhesion under wet and dry conditions, using the T-peel test ASTM D1876 (1978). A wet adhesion test was performed on test panels by first immersing the test panels in 90°C water for four days and then carrying out the T-peel test. A dry adhesion test was carried out on test panels without immersing the test panels in 90°C water.

### COMPARATIVE EXPERIMENT A

### 1. Preparation of advanced epoxy resin in the absence of solvent.

Diglycidyl ether of bisphenol A having an epoxide equivalent weight (EEW) of 189.18 and p,p′-bisphenol A were fed to the extruder in an equivalent ratio of epoxide groups to phenolic hydroxyl groups of 1.0308:1.000. The materials were added simultaneously to the feed port section. The materials were fed together in the feed port and 1 milliequivalent of ethyl triphenyl phosphonium acetate•acetic acid complex catalyst per equivalent of bisphenol A was separately added to the feed port. The catalyst was employed as a 70 percent solution in methanol. The charge to the extruder was as follows:
- epoxy resin:: 12.55 lbs per hour, 0.0663 lb. equivalent (5.70 kg/hour, 30.13 g equivalent);
- bisphenol A:: 7.33 lbs per hour, 0.0643 lb. equivalent (3.33 kg/hour, 29.23 g equivalent);
- active catalyst:: 28.9 grams per hour, 0.000155 lb. equivalent (0.071 g equivalent).

The liquid epoxy resin was fed from a vessel heated to 65°C. The melt temperature was controlled at 65°C to facilitate pumping. The bisphenol A was fed from a melt reservoir which was controlled at 170°C. The two raw materials were fed to the feed port section of the extruder (see extruder description). Catalyst was fed separately to the feed port section or admixed with the liquid resin just prior to the extruder feed port. The various heat zones were controlled to keep the melt below 200°C and the feed rate and screw speed were controlled to give an average residence time in the extruder of 2.5 to 3.5 minutes. The material was collected in thin sheets, cooled in air, and crushed into a powder. A solution was prepared by mixing this advanced epoxy resin with an organic solvent mixture such that the resultant solution contains 30 parts by weight (pbw) of advanced resin and 70 pbw of the organic solvent mixture. The organic solvent may be, for example, a blend of an ethylene glycol n-butyl ether such as Dowanol® EB (25 percent), 2-ethoxyethyl acetate (25 percent), xylene (25 percent) and isobutanol (25 percent).

### 2. Preparation of Coating Composition.

A coating was prepared by mixing the following components:
30 pbw of the advanced resin prepared in Comparative Experiment A-1.
70 pbw of an organic solvent composition as described in Comparative Experiment A-1.

The above mixture was heated for 4 hours at a temperature of 110°C. After cooling to ambient temperature, the resultant coating composition was applied to tin-free steel panels and cured in an oven at 210°C for 15 minutes. The thus coated panels are then cut into 5 mm wide strips and between each pair of strips was placed 0.08 mm thick Nylon™-12 tape. Each pair of strips was then heat bonded under a pressure of 150 psig (1,034.22 kPa) at a temperature of about 205°C for 0.5 minute. The panels were then tested for wet and dry adhesion and an average value obtained. The results are given in Table I.

### COMPARATIVE EXPERIMENT B

### 1. Description of commercially available epoxy resin.

Epikote™ 1009 (Shell Chemical Company) resin, a diglycidyl ether of bisphenol A having an EEW of 2,700 and 17,000 weight average molecular weight was evaluated.

A solution was prepared by mixing this epoxy resin with an organic solvent mixture as in Comparative Experiment A such that the resultant solution contains 30 pbw of epoxy resin and 70 pbw of the organic solvent mixture.

### 2. Preparation of Coating Composition.

A coating was prepared as described in Comparative Experiment A-2. The properties of the coating prepared from the commercial epoxy resin produced of Comparative Experiment 8 are given in Table I.

### COMPARATIVE EXPERIMENT C

### 1. Description of commercially available epoxy resin.

A resin, a diglycidyl ether of bisphenol A prepared by a solution process (see U.S. Patent No. 4,596,861) produced by The Dow Chemical Company and designated as SD669MS40 was evaluated. This epoxy resin contains 40 percent epoxy resin by weight and 60 percent organic solvent by weight.

A solution was prepared by mixing this epoxy resin with an organic solvent mixture as in Comparative Experiment A such that the resultant solution contains 30 pbw of epoxy resin and 70 pbw of the organic solvent mixture.

### 2. Preparation of Coating Composition.

A coating was prepared as described in Comparative Experiment A-2. The properties of the coating prepared from the commercial epoxy resin of Comparative Experiment C are given in Table I.

### Example 1

### A. Preparation of advanced epoxy resin in the presence of 1 weight percent of solvent.

Diglycidyl ether of bisphenol A having an EEW of 187.9 and p,p-bisphenol A were fed to the extruder in a molar ratio of epoxy resin to bisphenol A of 1.0805:1.0000. The procedure used in Comparative Experiment A was followed in this example. The materials were fed together in the feed port and 55.32 milliequivalent/hour of ethyl triphenyl phosphonium acetate•acetic acid complex catalyst per equivalent of bisphenol A and 90.72 g/hour ethylene glycol n-butyl ether solvent are separately added to the feed port. The catalyst was employed as a 70 percent solution in methanol and ethylene glycol n-butyl ether solvent was added to the catalyst solution so as to yield the desired level in the final epoxy resin product. The catalyst solution was prepared by adding 90.72 g ethylene glycol n-butyl ether to 32.40 g of 70 percent ethyl triphenyl phosphonium acetate•acetic acid complex in methanol to yield 1.0 percent ethylene glycol n-butyl ether in the final product. The charge to the extruder was as follows:
- epoxy resin:: 12.81 lbs per hour, 0.068 lb. equivalent (5.82 kg/hour, 30.98 g equivalent);
- bisphenol A:: 7.19 lbs per hour, 0.631 lb. equivalent (3.268 kg/hour, 28.67 g equivalent);
- active catalyst:: 22.68 grams per hour, 0.0001219 lb. equivalent (0.0553 g equivalent); and
- solvent:: 90.72 grams per hour, 0.00169 lb. equivalent (0.768 g equivalent).

A solution is prepared by mixing this advanced epoxy resin with an organic solvent mixture as in Comparative Experiment A such that the resultant solution contains 30 parts by weight (pbw) of advanced resin and 70 pbw of the organic solvent mixture.

### B. Preparation of Coating Composition.

A coating is prepared as described in Comparative Experiment A-2. The properties of the coating prepared from the advanced epoxy resin produced in Example 1 are given in Table I.

### Example 2

### A. Preoaration of advanced epoxy resin in the presence of 0.5 weight percent of solvent.

Diglycidyl ether of bisphenol A having an EEW of 188.1 and p,p-bisphenol A are fed to the extruder in a molar ratio of epoxy resin to bisphenol A of 1.081:1.000. The procedure used in Comparative Experiment A is followed in this example. The catalyst solution in this example is the same as in Example 2 except that the ethylene glycol n-butyl ether level is 0.5 percent instead of 1.0 percent. The charge to the extruder is as follows:
- epoxy resin:: 12.815 lbs per hour, 0.068 lb. equivalent (5.825 kg/hour, 30.97 g equivalent);
- bisphenol A:: 7.185 lbs per hour, 0.063 lb. equivalent (3.266 kg/hour, 28.65 g equivalent);
- active catalyst:: 8.16 grams per hour, 0.000044 lb. equivalent (0.0199 g equivalent);and
- solvent:: 45.36 grams per hour, 0.0008 lb. equivalent (0.384 g equivalent).

### B. Preparation of Coating Composition.

A coating is prepared as described in Comparative Experiment A-2. The properties of the coating prepared from the advanced epoxy resin produced in Example 2 are given in Table I.

### Example 3

### A. Preparation of advanced epoxy resin in the presence of 3 weight percent of solvent.

Diglycidyl ether of bisphenol A having an EEW of 188.1 and p,p-bisphenol A are fed to the extruder in a molar ratio of epoxy resin to bisphenol A of 1.081:1.000. The procedure used in Comparative Experiment A is followed in this example. The catalyst solution in this example is the same as in Example 1 except that the ethylene glycol n-butyl ether (solvent) level is 3.0 percent instead of 1.0 percent. The charge to the extruder is as follows:
- epoxy resin:: 12.815 lbs per hour, 0.068 lb. equivalent (5.825 kg/hour, 30.97 g equivalent);
- bisphenol A:: 7.185 lbs per hour, 0.063 lb equivalent (3.266 kg/hour, 28.65 g equivalent);
- catalyst solution:: 13.608 grams per hour, 0.000073 lb. equivalent (0.033 g equivalent); and
- solvent:: 272.16 grams per hour, 0.0051 lb equivalent (2.303 g equivalent).

### B. Preparation of Coating Composition.

A coating is prepared as described in Comparative Experiment A-2. The properties of the coating prepared from the advanced epoxy resin produced in Example 3 are given in Table I.

### Example 4

### A. Preparation of advanced epoxy resin in the presence of 4.5 weight percent of solvent.

Diglycidyl ether of bisphenol A having an EEW of 188.1 and p,p-bisphenol A are fed to the extruder in a molar ratio of epoxy resin to bisphenol A of 1.0829:1.0000. The procedure used in Comparative Experiment A is followed in this example. The catalyst solution in this example is the same as in Example 2 except that the ethylene glycol n-butyl ether (solvent) level is 4.5 percent instead of 1.0 percent. The charge to the extruder is as follows:
- epoxy resin:: 12.826 lbs per hour, 0.068 lb. equivalent (5.83 kg/hour, 30.929 g equivalent);
- bisphenol A:: 7.179 lbs per hour, 0.0630 lb. equivalent (3.263 kg/hour, 28.56 g equivalent);
- catalyst solution:: 13.608 grams per hour, 0.000073 lb. equivalent (0.033 g equivalent); and
- solvent:: 408.24 grams per hour, 0.00755 lb. equivalent (3.45 g equivalent).

### B. Preparation of Coating Composition.

A coating is prepared as described in Comparative Experiment A-2. The properties of the coating prepared from the advanced epoxy resin produced in Example 4 are given in Table I.

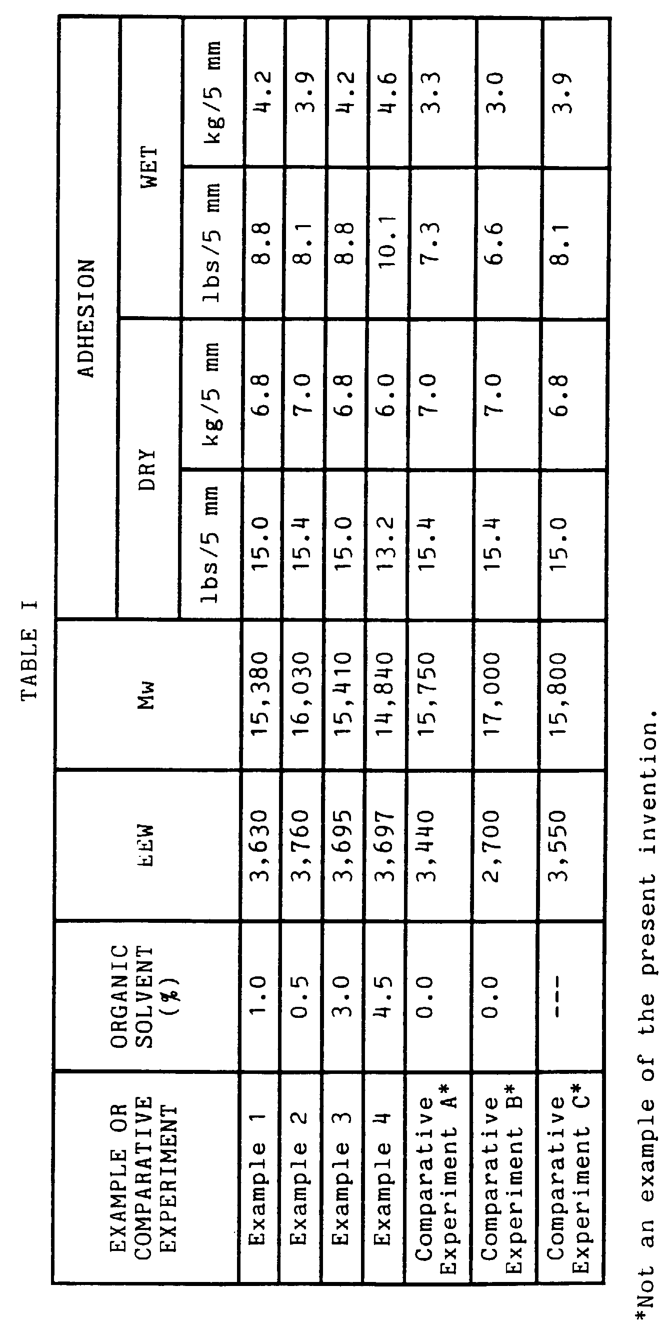

## Claims

1. A process for preparing an advanced epoxy resin composition containing an organic solvent which process comprises continuously feeding to an extruder the following components either separately or in admixture in any combination
(A) at least one compound having an average of more than one but not more than two vicinal epoxide groups per molecule and having an epoxide equivalent weight of from 170 to 200;
(B) at least one compound having an average of more than one but not more than two aromatic hydroxyl groups per molecule;
(C) at least one catalyst for promoting the reaction between components (A) and (B); and
(D) at least one organic solvent; wherein
(a) components (A) and (B) are employed in quantities such that the resultant advanced resin has an epoxide or aromatic hydroxyl equivalent weight from 500 to 25,000 and a weight average molecular weight of from 1,000 to 100,000; and
(b) component (D) is employed in an amount such that the resultant product contains from 0.5 to less than 5 percent by weight, based upon the combined weights of components (A), (B), (C) and (D).

2. A process as described in Claim 1 wherein the advanced epoxide resin has an epoxide equivalent weight of from 700 to 10,000 and a weight average molecular weight of from 5,000 to 90,000.

3. A process as described in Claim 1 wherein the advanced epoxide resin has an epoxide equivalent weight of from 3,000 to 3,900 and a weight average molecular weight of from 13,000 to 17,000.

4. A process as described in any of Claims 1 to 3 wherein component (D) is employed in an amount such that the resultant product contains 0.5 to 2 percent by weight, based on the combined weights of components (A), (B), (C) and (D).

5. A process as described in any of Claims 1 to 3 wherein component (D) is employed in an amount such that the resultant product contains 0.5 to 1 percent by weight, based on the combined weights of components (A), (B), (C) and (D).

6. A process as described in any of Claims 1 to 5 wherein the ratio of aromatic hydroxyl groups in component (B) to epoxide groups in component (A) is from 0.3:1 to 1.1:1.

7. A process as described in any of Claims 1 to 6 wherein the temperature in the extruder is from 90°C to 280°C.

8. A process as described in any of Claims 1 to 7 wherein component (A) is a diglycidyl ether of any of biphenol, bisphenol A, bisphenol F, bisphenol K or bisphenol S; and component (B) is any of biphenol, bisphenol A, bisphenol F, bisphenol K or bisphenol S.

## Patentansprüche

1. Verfahren zur Herstellung von kettenverlängerten Epoxidharzen, die ein organisches Lösungsmittel enthalten, bei dem man einem Extruder die folgenden Bestandteile, getrennt oder in beliebiger Kombination gemischt, kontinuierlich zuführt:
(A) mindestens eine Verbindung mit durchschnittlich mehr als einer, aber nicht mehr als durchschnittlich zwei vicinalen Epoxidgruppen pro Molekül und mit einem Epoxidäquivalentgewicht von 170 bis 200;
(B) mindestens eine Verbindung mit durchschnittlich mehr als einer, aber nicht mehr als zwei aromatischen Hydroxylgruppen pro Molekül;
(C) mindestens einen Katalysator zur Förderung der Reaktion zwischen den Komponenten (A) und (B); und
(D) mindestens ein organisches Lösungsmittel; wobei
(a) die Komponenten (A) und (B) in solchen Mengen verwendet werden, daß das entstehende kettenverlängerte Harz ein Epoxid- oder aromatisches Hydroxyläquivalentgewicht von 500 bis 25.000 und ein gewichtsdurchschnittliches Molekulargewicht von 1.000 bis 100.000 hat;
(b) die Komponente (D) in einer solchen Menge verwendet wird, daß das entstehende Produkt von 0,5 bis weniger als 5 Gewichtsprozent, bezogen auf die Summe der Gewichte der Komponenten (A), (B), (C) und (D), davon enthält.

2. Verfahren wie in Anspruch 1 beschrieben, wobei das kettenverlängerte Epoxidharz ein Epoxidäquivalentgewicht von 700 bis 10.000 und ein gewichtsdurchschnittliches Molekulargewicht von 5.000 bis 90.000 hat.

3. Verfahren wie in Anspruch 1 beschrieben, wobei das kettenverlängerte Epoxidharz ein Epoxidäquivalentgewicht von 3.000 bis 3.900 und ein gewichtsdurchschnittliches Molekulargewicht von 13.000 bis 17.000 hat.

4. Verfahren wie in einem der Ansprüche 1 bis 3 beschrieben, wobei die Komponente (D) in einer solchen Menge verwendet wird, daß das entstehende Produkt 0,5 bis 2 Gewichtsprozent, bezogen auf die Summe der Gewichte der Komponenten (A), (B), (C) und (D), davon enthält.

5. Verfahren wie in einem der Ansprüche 1 bis 3 beschrieben, wobei die Komponente (D) in einer solchen Menge verwendet wird, daß das entstehende Produkt 0,5 bis 1 Gewichtsprozent, bezogen auf die Summe der Gewichte der Komponenten (A), (B), (C) und (D), davon enthält.

6. Verfahren wie in einem der Ansprüche 1 bis 5 beschrieben, wobei das Verhältnis der in der Komponente (B) enthaltenen aromatischen Hydroxylgruppen zu den Epoxidgruppen der Komponente (A) von 0,3:1 bis 1,1:1 beträgt.

7. Verfahren wie in einem der Ansprüche 1 bis 6 beschrieben, wobei die Temperatur in dem Extruder 90°C bis 280°C beträgt.

8. Verfahren wie in einem der Ansprüche 1 bis 7 beschrieben, wobei die Komponente (A) ein Diglycidylether des Biphenols, Bisphenols A, Bisphenols F, Bisphenols K oder Bisphenols S ist; und die Komponente (B) Biphenol, Bisphenol A, Bisphenol F, Bisphenol K oder Bisphenol S ist.

## Revendications

1. Procédé de préparation d'une composition de résine époxy à chaîne développée, contenant un solvant organique, qui comprend l'introduction en continu dans une extrudeuse des constituants suivants, soit séparément, soit en mélange sous forme d'une combinaison quelconque :
(A) au moins un composé possédant en moyenne plus d'un mais pas plus de deux groupes époxy vicinaux par molécule et présentant un équivalent époxyde de 170 à 200,
(B) au moins un composé présentant en moyenne plus d'un mais pas plus de deux groupes hydroxyle aromatiques par molécule,
(C) au moins un catalyseur pour faciliter la réaction entre les constituants (A) et (B), et
(D) au moins un solvant organique,
procédé dans lequel :
(a) on utilise les constituants (A) et (B) en des quantités telles que la résine à chaîne développée résultante présente un équivalent époxyde ou hydroxyle aromatique de 500 à 25.000 et une masse moléculaire moyenne en poids de 1000 à 100.000, et
(b) on utilise le constituant (D) en une quantité telle que le produit résultant en contient de 0,5 à moins de 5 % en poids, par rapport aux poids combinés des constituants (A), (B), (C) et (D).

2. Procédé selon la revendication 1, dans lequel la résine époxy à chaîne développée présente un équivalent époxyde de 700 à 10.000 et une masse moléculaire moyenne en poids de 5000 à 90.000.

3. Procédé selon la revendication 1, dans lequel la résine époxy à chaîne développée présente un équivalent époxyde de 3000 à 3900 et une masse moléculaire moyenne en poids de 13.000 à 17.000.

4. Procédé selon l'une quelconque des revendications 1 à 3, dans lequel on utilise le constituant (D) en une quantité telle que le produit résultant en contient 0,5 à 2 % en poids, par rapport aux poids combinés des constituants (A), (B), (C) et (D).

5. Procédé selon l'une quelconque des revendications 1 à 3, dans lequel on utilise le constituant (D) en une quantité telle que le produit résultant en contient 0,5 à 1 % en poids, par rapport aux poids combinés des constituants (A), (B), (C) et (D).

6. Procédé selon l'une quelconque des revendications 1 à 5, dans lequel le rapport des groupes hydroxyle aromatiques du constituant (B) aux groupes époxy du constituant (A) est de 0,3:1 à 1,1:1.

7. Procédé selon l'une quelconque des revendications 1 à 6, dans lequel la température dans l'extrudeuse est de 90°C à 280°C.

8. Procédé selon l'une quelconque des revendications 1 à 7, dans lequel le constituant (A) est un éther diglycidylique de l'un quelconque des composés biphénol, bisphénol A, bisphénol F, bisphénol K et bisphénol S, et le constituant (B) est l'un quelconque des composés biphénol, bisphénol A, bisphénol F, bisphénol K et bisphénol S.
